# EUROPÄISCHE PATENTSCHRIFT

(11) **EP 3 802 019 B1**
(45) Veröffentlichungstag und Bekanntmachung des Hinweises auf die Patenterteilung: **26.11.2025**
(21) Anmeldenummer: 19728391.4
(22) Anmeldetag: 30.05.2019
(51) Int. Cl.: B25J 19/00, H02K 11/33, H02K 11/21, H05K 7/20, H02K 9/22, B25J 17/00, B25J 9/12, H02K 11/215, H02K 7/14

(54) **ANTRIEBSVORRICHTUNG FÜR EINEN MANIPULATOR**
DRIVE APPARATUS FOR A MANIPULATOR
DISPOSITIF D'ENTRAÎNEMENT POUR UN MANIPULATEUR

(30) Priorität: 02.06.2018 DE 102018004358
(43) Veröffentlichungstag der Anmeldung: 14.04.2021
(73) Patentinhaber: FR Administration GmbH, 81369 München (DE)
(72) Erfinder: ROKAHR, Tim, 81245 München (DE); SPENNINGER, Andreas, 85757 Karlsfeld (DE); LEYENDECKER, Patrick, 89542 Herbrechtingen (DE); BÖHME, Niklas, 80992 München (DE)
(74) Vertreter: Cohausz & Florack
(86) Internationale Anmeldenummer: PCT/EP2019/064148
(87) Internationale Veröffentlichungsnummer: WO 2019/229216

(56) Entgegenhaltungen:
- WO-A1-2015/131904
- DE-A1- 102015 225 750
- DE-B3- 102016 004 810
- DE-T5- 112014 006 362
- US-A1- 2014 326 530

## Beschreibung

Die vorliegende Erfindung betrifft eine Antriebsvorrichtung für ein Gelenk zwischen zwei Achsgliedern eines Manipulators eines Robotersystems.

Antriebseinheiten, die in Manipulatoren von Robotersystemen bzw. Roboterarmen zum Einsatz kommen, dienen dazu, ein Achsglied des in der Regel mehrachsig konstruierten Roboterarms gegenüber einem daran anschließenden Achsglied bewegbar, vorzugsweise drehbar, anzuordnen. Die auf diese Weise sich ergebende Beweglichkeit zwischen zwei aneinandergrenzenden Achsgliedern führt über die Anzahl der Achsglieder des Manipulators zu den entsprechenden Freiheitsgraden des Robotersystems.

Bei Industrierobotern kommen dabei Antriebseinheiten zum Einsatz, die eine Drehung eines Achsglieds um eine quer zu seiner Längserstreckung verlaufenden Achse gestatten. Weitere Antriebsvorrichtungen sind konzipiert, um eine Drehung um die Längsachse des Achsglieds zu gestatten. Hierfür kommen in der Regel entsprechend dimensionierte Elektromotoren zum Einsatz, die gegebenenfalls mit einem entsprechenden untersetzenden Getriebe zusammenwirken.

Bei Leichtbaurobotern werden die Antriebsvorrichtungen in das in sich geschlossene Gehäuse der Achsglieder eingebaut, da die Gehäuse bei den Manipulatoren von derartigen Robotertypen grundsätzlich wie ein Exoskelett konzipiert sind.

Bei den aus dem Stand der Technik bekannten Antriebsvorrichtungen ist in der Regel abtriebsseitig zumindest eine Sensorvorrichtung vorgesehen, um die Position, das Drehmoment und/oder die Drehzahl eines Abtriebselements zu detektieren, das das eine Achsglied gegenüber dem anderen Achsglied in Drehung versetzt. Zur Detektion der Antriebsdrehzahl, des Antriebsdrehmoments und/oder der Position einer von einem Motor angetriebenen Antriebswelle ist darüber hinaus motorseitig bzw. antriebsseitig eine weitere Sensorvorrichtung vorgesehen.

Um einen besonders kompakten Aufbau zu ermöglichen, ist in dem Deutschen Patent Nr. 10 2016 004 810 eine Antriebsvorrichtung insbesondere für den Einsatz bei Leichtbaurobotern vorgeschlagen worden, bei der beide Sensorvorrichtungen auf einer einzigen Leiterplatte angeordnet sind.

Diese Antriebsvorrichtung für ein zwischen zwei Achsgliedern eines Manipulators eines Robotersystems angeordnetes Gelenk zum rotatorischen Antrieb des einen Achsglieds gegenüber dem anderen Achsglied weist einen Motor, der eine Antriebswelle antreibt, und ein Abtriebselement auf, das mit dem einen Achsglied in Verbindung steht und von der Antriebswelle mittelbar oder unmittelbar in Drehung versetzt wird, wobei eine Leiterplatte bzw. Leiterplatine (PCB) vorgesehen ist, auf der eine Sensorvorrichtung für den durch die Antriebswelle bereitgestellten Antrieb und eine Sensorvorrichtung für den durch das Abtriebselement bereitgestellten Abtrieb angeordnet sind, wobei die Sensorvorrichtung für den Antrieb und die Sensorvorrichtung für den Abtrieb auf einander gegenüberliegenden Seiten der Leiterplatte angeordnet sind.

Des Weiteren ist eine Sensorwelle vorgesehen, mit der das Abtriebselement drehfest verbunden ist, wobei sich die Sensorwelle durch eine Öffnung in der Leiterplatte zu der Seite der Leiterplatte erstreckt, die dem Motor gegenüberliegt und wobei im Bereich des stirnseitigen axialen Endes der Sensorwelle oberhalb der Leiterplatte ein Positions- bzw. Sensorring vorgesehen ist, der mit der Sensorvorrichtung für den Abtrieb zusammenwirkt. Der Sensorring ist in einem Lagersitz drehbar gelagert und mit der Sensorwelle drehfest verbunden.

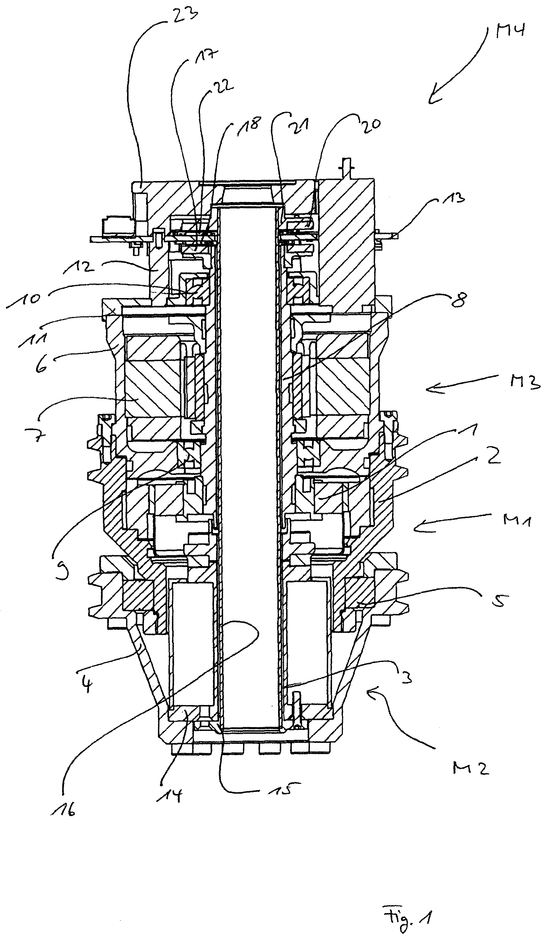

Bei einer derartigen Ausgestaltung der Antriebsvorrichtung aus dem Stand der Technik, wie diese exemplarisch in der Fig. 1 gezeigt ist, sind folglich alle elektronischen Komponenten zur Steuerung der Antriebsvorrichtung für sowohl den Abtrieb als auch den Antrieb, für Sensorvorrichtungen sowie weitere Steuerungs- und Leistungskomponenten auf einer einzigen Leiterplatte in dichter Anordnung vorgesehen. Selbstredend ist die Wärmeentwicklung durch die einzelnen elektronischen Bauteile im Bereich der Platine daher hoch, wobei sich dies insbesondere bei einem relativ langen, durchgehenden Betrieb des Roboters bemerkbar macht.

Grundsätzlich muss eine zu hohe Wärmeentwicklung im Bereich der Leiterplatte vermieden werden, um die Funktionssicherheit der elektronischen Komponenten und damit der Steuerung des Roboters durch Fehlfunktionen und Ausfälle nicht unnötig zu gefährden. Darüber hinaus besteht das Problem, dass bei exoskelettartigen Gehäusestrukturen von Manipulatoren die Wärme nur sehr schlecht, zumindest nicht schnell genug aus dem Bereich der Leiterplatte abgeführt werden kann. Fluidgestützte Kühlvorrichtungen eignen sich auf Grund der Beweglichkeit der Manipulatoren hierfür eher nicht.

Wärmesenken im Bereich von Antriebseinheiten insbesondere für Roboterarme sind beispielsweise aus der WO 2015/131904 A1 und der DE 10 2015 225 750 A1 bekannt.

Ausgehend davon ist es eine Aufgabe der vorliegenden Erfindung, eine Antriebsvorrichtung für ein zwischen zwei Achsgliedern eines Manipulators eines Robotersystems, insbesondere, jedoch nicht ausschließlich der Leichtbauweise, zur Verfügung zu stellen, die die oben genannten, aus dem bisherigen Stand der Technik bekannten Nachteile ausräumt, insbesondere eine Möglichkeit schafft, wie die im Bereich von elektronischen Komponenten entstehende Wärme effektiv abgeführt werden kann. Insbesondere stellt sich die Erfindung die Aufgabe, die aus der oben genannten DE 10 2016 004 810 bekannte Antriebsvorrichtung in diesem Sinn entsprechend weiterzubilden.

Gelöst wird diese Aufgabe mit einer Antriebsvorrichtung nach Anspruch 1 sowie mit einem Roboter nach Anspruch 5.

Die Erfindung betrifft demzufolge eine Antriebsvorrichtung für ein zwischen zwei Achsgliedern eines Manipulators eines Robotersystems angeordnetes Gelenk zum rotatorischen Antrieb des einen Achsglieds gegenüber dem anderen Achsglied, mit einem Motor, der eine Antriebswelle antreibt, mit einem Abtriebselement, das mit dem einen Achsglied in Verbindung steht und von der Antriebswelle mittelbar oder unmittelbar in Drehung versetzt wird, mit einer Leiterplatte, auf der eine Sensorvorrichtung für den durch die Antriebswelle bereitgestellten Antrieb, eine Sensorvorrichtung für den durch das Abtriebselement bereitgestellten Abtrieb sowie eine Steuerelektronik für die Steuerung der Antriebsvorrichtung angeordnet sind, wobei zumindest eine Wärmesenke vorgesehen ist, die die Leiterplatte mit einem Gehäuse bzw. Gehäuseabschnitt des Motors wärmeleitend verbindet.

Gemäß der Erfindung ist die Wärmesenke im Verhältnis zu der Leiterplatte so angeordnet, dass sie an einer Stelle der Leiterplatte angreift, die den auf der Leiterplatte angeordneten elektronischen Komponenten der Steuerelektronik gegenüberliegt, von denen die abzuführende Wärme erzeugt wird.

Um die Leiterplatte hierbei nicht zu beschädigen, ist es vorgesehen, dass zwischen der Leiterplatte und der Wärmesenke zumindest ein thermisch leitender Gap-Filler, beispielsweise aus Silikon oder einem anderen geeigneten Kunststoff vorgesehen ist.

Darüber hinaus ist es vorgesehen, um bei der Montage der Antriebsvorrichtung die Leiterplatte bzw. deren Oberfläche oder die darauf befindlichen elektronischen Bauteile nicht zu beschädigen, dass der thermisch leitende Gap-Filler in einer Ausnehmung der Wärmesenke so aufgenommen ist, dass dieser beim Zusammenbauen und Demontieren der Antriebsvorrichtung sowie auch im Betrieb des Manipulators nicht verrutschen kann.

Gemäß der Erfindung ist es vorgesehen, dass die Wärmesenke mit dem Gehäuse oder Gehäuseabschnitt des Motors einstückig ausgebildet ist, beispielsweise aus einem gemeinsamen Metallkörper gefräst ist.

Eine Fixierung und genaue Positionierung der Wärmesenke gegenüber der Leiterplatte kann dadurch erfolgen, dass die Leiterplatte mit dem Gehäuse des Motors verschraubt wird.

Um eine effektive Wärmeabfuhr von der Leiterplatte zu gewährleisten, weist die Wärmesenke eine Form und Ausgestaltung auf, die im Bereich des Kontakts mit der Leiterplatte an der geometrischen Verteilung der elektronischen Komponenten der Steuerelektronik ausgerichtet ist. Mit anderen Worten, die Kontur bzw. der Querschnitt der Wärmesenke in Radialrichtung der Antriebsvorrichtung folgt der Anordnung der wärmeerzeugenden Steuerelektronik.

Um darüber hinaus eine noch weitere Wärmeabfuhr zu ermöglichen, kann es auch vorgesehen sein, dass die Wärmesenke mit dem in der Regel auch aus Metall bestehenden Gehäuse eines Armglieds des Manipulators in einer wärmeleitenden Verbindung steht, z. B. über entsprechend in Radialrichtung ausgestaltete wärmeleitende Streben.

Die Bereitstellung einer Wärmesenke, die hinsichtlich Form, Dimensionierung und Material an die thermischen Gegebenheiten der Leiterplatte sowie die geometrische Anordnung der elektronischen Bauteile im Vorfeld beliebig angepasst werden kann, stellt sicher, dass die im Bereich der Leiterplatte erzeugte Wärme aus diesem abgeführt werden kann, wodurch kein Wärmestau entsteht, der die Funktionssicherheit der Steuerelektronik und der Sensorvorrichtungen beeinträchtigen oder gar schädigen könnte. Die Realisierung der Wärmesenke als vorzugsweise integralen Bestandteil des Motorgehäuses erlaubt eine einfache und kostengünstige Herstellung und ermöglicht darüber hinaus eine einfache Montage.

In diesem Zusammenhang betrifft die Erfindung daher auch einen Roboter mit einem Manipulator aus mehreren Achsgliedern aufweisend eine Antriebsvorrichtung gemäß den oben geschilderten Ausführungsformen in zumindest einem zwischen Achsgliedern des Manipulators angeordneten Gelenk.

Weitere Vorteile und Merkmale ergeben sich aus der Beschreibung des anhand der beilegenden Zeichnungen dargestellten Ausführungsbeispiels. Es zeigen:
- Fig. 1: einen axialen Längsschnitt durch eine Antriebsvorrichtung gemäß dem Stand der Technik;
- Fig. 2: in perspektivischer Ansicht einen Gehäuseabschnitt des Motors;
- Fig. 3: in perspektivischer Ansicht einen Gehäuseabschnitt des Motors mit einem Gap-Filler; und
- Fig. 4: schematisch den Zusammenbau eines Gehäuseabschnitts mit einer Leiterplatte der Antriebsvorrichtung.

In der Fig. 1 ist zum Verständnis exemplarisch eine Antriebsvorrichtung aus dem Stand der Technik in einer Querschnittsansicht entlang der Drehachse, d.h. Längserstreckung der Antriebsvorrichtung gezeigt, wie diese beispielsweise aus dem Deutschen Patent Nr. 10 2016 004 810 bekannt ist.

Wie zu erkennen ist, ist die Antriebsvorrichtung im Wesentlichen aus rotationssymmetrisch ausgestalteten Komponenten und Bauteilen aufgebaut, wobei eine Modulbauweise realisiert wird, bei der mehrere Module in einer axialen Ausrichtung funktional zusammenwirken und ineinandergreifen. Die Module sind für sich jeweils einzeln austauschbar und lassen sich miteinander mit Hilfe von entsprechend konzipierten und ausgestalteten Verbindungstechniken verbinden.

Die in Fig. 1 gezeigte Antriebsvorrichtung besteht im Wesentlichen aus vier funktional unterschiedlichen Antriebsmodulen.

Ein erstes Antriebsmodul M1 beinhaltet ein Getriebe 1, beispielsweise ein Wellgetriebe, das in einem Gehäuse 2 aufgenommen ist. Das Ausgangselement des Getriebes 1 ist über eine Abtriebswelle 3 mit einem Gehäuse 4 eines zweiten Antriebsmoduls M2 drehfest, d.h. drehmomentübertragend verbunden. Das zweite Antriebsmodul M2 dient dem Abtrieb und ist zu diesem Zweck mit einem nicht dargestellten Achsglied eines Manipulators bzw. Roboterarms drehfest verbunden, während das Gehäuse 2 des ersten Antriebsmoduls M1 mit einem nicht dargestellten weiteren Achsglieds dieses Manipulators verbunden ist. Das Gehäuse 4 des zweiten Antriebsmoduls M2 ist mittels eines Radiallagers 5 gegenüber dem Gehäuse 2 des ersten Antriebsmoduls M1 drehbar gelagert.

Dem zweiten Antriebsmodul M2 axial gegenüberliegend ist an dem ersten Antriebsmodul M1 ein drittes Antriebsmodul M3 befestigt, das ein Gehäuse 6 aufweist, in dem ein Motor 7 angeordnet ist, der eine Motor- bzw. Antriebswelle 8 antreibt.

Die Antriebswelle 8 ist durch ein erstes Radiallager 9 in der Nähe des Getriebes 1 und durch ein zweites Radiallager 10 in einer Abdeckung 11 für das Gehäuse 6 drehbar und dadurch zentral in der Antriebsvorrichtung gelagert.

Auf dem Gehäuse 6 des dritten Antriebsmoduls M3 bzw. auf der diesem zugehörigen Abdeckung 11 ist über Verbindungs- bzw. Abstandshalter 12 ein viertes Antriebsmodul M4 befestigt, das eine Leiterplatte 13 bzw. PCB für eine Sensor- und Steuerelektronik aufweist.

Die Antriebswelle 8 des Motors 7, die als eine Hohlwelle ausgebildet ist, erstreckt sich durch die Abdeckung 11 hindurch bis zu der Seite der Leiterplatte 13, die der Abdeckung 11 zugewandt ist.

Das Gehäuse 4 des zweiten Antriebsmoduls M2 ist stirnseitig über einen Flansch 14 mit einem Flansch 15 einer Sensorwelle 16 drehfest verschraubt.

Wie in der Fig. 1 zu erkennen ist, durchsetzt die Sensorwelle 16 die Abtriebswelle 3 und die Antriebswelle 8 des Motors 7 in einem radialen Abstand und erstreckt sich durch eine Öffnung in der Leiterplatte 13 bis zu der Seite der Leiterplatte 13, die dem dritten Antriebsmodul M3 gegenüberliegt.

Das der Leiterplatte 13 zugewandte stirnseitige axiale Ende der Antriebswelle 8 weist einen Sensorring 17 auf, während auf der Leiterplatte 13 ein entsprechend diesem Sensorring 17 zugeordneter Sensorchip 18 angeordnet ist. Der Sensorring 17 ist auf einem Haltering 19 befestigt, so dass sich der Sensorring 17 mit der Antriebswelle 8 dreht.

Die Sensorwelle 16 weist ebenfalls an ihrem stirnseitigen axialen Ende einen Sensorring 20 auf, der ebenfalls in einem entsprechenden Haltering 21 befestigt ist und sich so über einen diesem Sensorring 20 zugeordneten Sensorchip 22 auf der Leiterplatte 13 dreht.

Um den Sensorring 20 der Sensorwelle 16 exakt konzentrisch und parallel zu dem Sensorchip 22 zu führen, ist bei diesem Stand der Technik auf der Leiterplatte 13 eine radiale Gleitführung 23 angeordnet, die mit den Abstandshaltern 12 verschraubt wird.

Um den Sensorring 17 der Antriebswelle 8 exakt konzentrisch und parallel zu dem Sensorchip 18 zu führen, ist das zweite Radiallager 10 des dritten Antriebsmoduls M3 so nahe wie möglich an der Leiterplatte 13 angeordnet.

Die vorliegende Erfindung bezieht sich im weitesten Sinne auf die Ausgestaltung der Module M3 und M4 sowie deren Verbindung, und ist daher prinzipiell unabhängig von der tatsächlichen Ausgestaltung der weiteren Module M1 bis M4 und deren Komponenten. Der Aufbau dieser Module kann aber im Prinzip analog wie beim Stand der Technik realisiert sein.

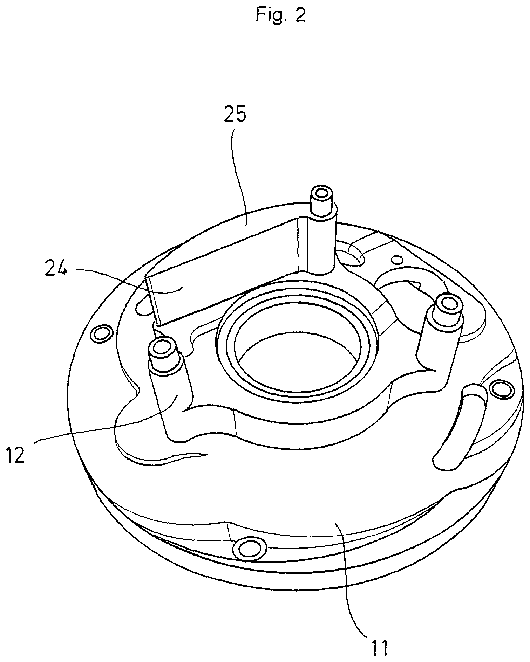

In der Fig. 2 ist ein oberer Gehäuseabschnitt bzw. Gehäusedeckel 11 des Motors 7 gezeigt.

Dieser weist neben den Abstandshaltern 12, die gleichzeitig ein Innengewinde zur Aufnahme von Schrauben aufweisen, mit denen die Leiterplatte 13 mit dem Gehäusedeckel 11 verbunden wird, an einer entsprechenden Stelle eine Wärmesenke 24 auf, die mit dem Gehäusedeckel 11 einstückig ausgebildet ist.

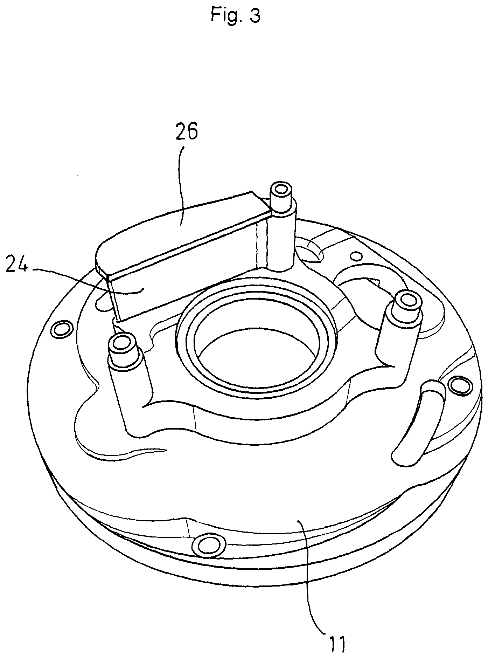

Auf der Oberfläche der Wärmesenke 24 ist eine Ausnehmung 25 vorgesehen, die der Aufnahme eines thermisch leitenden Pads oder Gap-Fillers 26 dient, wie die Fig. 3 zeigt.

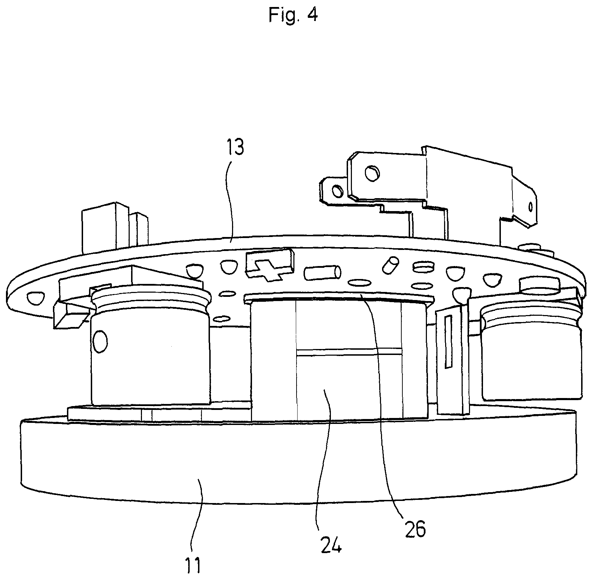

Mit dem Gap-Filler 26 kontaktiert die Wärmesenke 24 im zusammengebauten Zustand die Unterseite der Leiterplatte 13, wo sich entsprechende elektronische Komponenten ggfs. zu beiden Seiten der Leiterplatte 13 befinden, deren Wärme abgeführt werden soll, wie in der Fig. 4 gezeigt ist.

Auf Grund der Materialeigenschaften und der größeren Masse des Gehäusedeckels 11 mit der integralen Wärmesenke 24 kann so gemäß der Erfindung die im Bereich der Leiterplatte 13 entstehende Wärme effektiv von dieser abgeführt werden, so dass dort eine die Funktionssicherheit beeinträchtigende übermäßige Wärmeentwicklung effektiv vermieden werden kann.

## Patentansprüche

1. Antriebsvorrichtung für ein zwischen zwei Achsgliedern eines Manipulators eines Robotersystems angeordnetes Gelenk zum rotatorischen Antrieb des einen Achsglieds gegenüber dem anderen Achsglied,
- mit einem Motor (7), der eine Antriebswelle (8) antreibt, mit einem Abtriebselement (3,4), das mit dem einen Achsglied in Verbindung steht und von der Antriebswelle (8) mittelbar oder unmittelbar in Drehung versetzt wird,
- mit einer Leiterplatte (13), auf der eine Sensorvorrichtung (18) für den durch die Antriebswelle (8) bereitgestellten Antrieb, eine Sensorvorrichtung (22) für den durch das Abtriebselement (3,4) bereitgestellten Abtrieb sowie eine Steuerelektronik für die Steuerung der Antriebsvorrichtung angeordnet sind,
- wobei der Motor (7) ein Gehäuse mit einer Abdeckung (11) aufweist, auf der ein Abstandshalter (12) zur Befestigung der sich in Radialrichtung der Antriebwelle erstreckenden Leiterplatte (13) vorgesehen sind,
- wobei zumindest eine mit der Abdeckung (11) des Gehäuses (6) einstückig ausgebildete Wärmesenke (24) angeordnet ist, die sich in Axialrichtung bis unterhalb der Leiterplatte (13) unter Beibehaltung eines Abstands erstreckt
- wobei zwischen der Leiterplatte (13) und der Wärmesenke (24) zumindest ein thermisch leitender Gap-Filler (26) angeordnet ist, und
- wobei die Wärmesenke (24) mit dem Gap-Filler (26) im zusammengebauten Zustand die der Abdeckung zuwandte Seite der Leiterplatte wärmeleitend kontaktiert.

2. Antriebsvorrichtung nach Anspruch 1, bei der der thermisch leitende Gap-Filler (26) in einer Ausnehmung (25) der Wärmesenke (24) aufgenommen ist.

3. Antriebsvorrichtung nach einem der vorhergehenden Ansprüche, bei der die Wärmesenke (24) eine Form und Ausgestaltung aufweist, die im Bereich des Kontakts mit der Leiterplatte (13) an der geometrischen Verteilung der elektronischen Komponenten der Steuerelektronik ausgerichtet ist.

4. Antriebsvorrichtung nach einem der vorhergehenden Ansprüche, bei der die Wärmesenke (24) mit dem Gehäuse eines Armglieds des Manipulators in einer wärmeleitenden Verbindung steht.

5. Roboter mit einem Manipulator aus mehreren Achsgliedern aufweisend eine Antriebsvorrichtung gemäß den Ansprüchen 1 bis 4 in zumindest einem zwischen Achsgliedern des Manipulators angeordneten Gelenk

## Claims

1. Drive device for a joint arranged between two axle members of a manipulator of a robot system for rotary drive of one axle member relative to the other axle member,
- with a motor (7) which drives a drive shaft (8), with an output element (3, 4) which is connected to the one axle member and is set into rotation directly or indirectly by the drive shaft (8),
- with a printed circuit board (13) on which a sensor device (18) for the drive provided by the drive shaft (8), a sensor device (22) for the drive provided by the output element (3, 4), and a control electronics for controlling the drive device are arranged,
- wherein the motor (7) has a housing with a cover (11) on which a spacer (12) is provided for fastening the printed circuit board (13) extending in the radial direction of the drive shaft,
- wherein at least one heat sink (24) is arranged integrally with the cover (11) of the housing (6) which extends in the axial direction to below the printed circuit board (13) while maintaining a distance
- wherein at least one thermally conductive gap filler (26) is arranged between the printed circuit board (13) and the heat sink (24), and
- wherein the heat sink (24) in the assembled state is in thermally conductive contact with the side of the printed circuit board facing the cover via the gap filler (26).

2. Drive device according to claim 1, wherein the thermally conductive gap filler (26) is arranged wihin a recess (25) of the heat sink (24).

3. Drive device according to one of the preceding claims, wherein the heat sink (24) has a shape and design which, in the area of contact with the printed circuit board (13), is aligned with the geometric distribution of the electronic components of the control electronics.

4. Drive device according to one of the preceding claims, wherein the heat sink (24) is in a thermally conductive connection with the housing of an arm member of the manipulator.

5. Robot with a manipulator comprising several axle members, having a drive device according to claims 1 to 4 in at least one joint arranged between axle members of the manipulator.

## Revendications

1. Dispositif d'entraînement pour une articulation disposée entre deux éléments d'axe d'un manipulateur d'un système robotisé pour entraîner en rotation un élément d'axe par rapport à l'autre élément d'axe,
- avec un moteur (7) qui entraîne un arbre d'entraînement (8), avec un élément de sortie (3, 4) qui est relié à l'élément d'axe et qui est mis en rotation directement ou indirectement par l'arbre d'entraînement (8),
- avec une carte de circuit imprimé (13) sur laquelle sont disposés un dispositif capteur (18) pour l'entraînement fourni par l'arbre d'entraînement (8), un dispositif capteur (22) pour l'entraînement de sortie fourni par l'élément de sortie (3, 4) ainsi qu'une électronique de commande pour la commande du dispositif d'entraînement,
- où le moteur (7) comporte un boîtier avec un couvercle (11) sur lequel est prévue une entretoise (12) pour fixer la carte de circuit imprimé (13) s'étendant dans une direction radiale de l'arbre d'entraînement,
- où au moins un dissipateur thermique (24) formé en une pièce avec le couvercle (11) du boîtier (6) est disposé, qui s'étend dans la direction axiale jusqu'en dessous de la carte de circuit imprimé (13) en conservant une distance,
- où au moins un matériau de remplissage thermiquement conducteur (26) est disposé entre la carte de circuit imprimé (13) et le dissipateur thermique (24), et
- où le dissipateur thermique (24) est en contact thermique, ensemble avec le matériau de remplissage (26) à l'état assemblé, avec le côté de la carte de circuit imprimé tourné vers le couvercle.

2. Dispositif d'entraînement selon la revendication 1, dans lequel le matériau de remplissage thermiquement conducteur (26) est logé dans un évidement (25) du dissipateur thermique (24).

3. Dispositif d'entraînement selon l'une des revendications précédentes, dans lequel le dissipateur thermique (24) a une forme et une configuration qui, dans la zone de contact avec la carte de circuit imprimé (13), est alignée avec la répartition géométrique des composants électroniques du système électronique de commande.

4. Dispositif d'entraînement selon l'une des revendications précédentes, dans lequel le dissipateur thermique (24) est en liaison thermique avec le boîtier d'un élément de bras du manipulateur.

5. Robot avec un manipulateur composé de plusieurs éléments d'axe, comportant un dispositif d'entraînement selon les revendications 1 à 4 dans au moins une articulation disposée entre les éléments d'axe du manipulateur.
